# EUROPEAN PATENT SPECIFICATION

(11) **EP 1 834 828 B1**
(45) Date of publication and mention of the grant of the patent: **16.11.2011**
(21) Application number: 07102833.6
(22) Date of filing: 21.02.2007
(51) Int. Cl.: B60K 17/34

(54) **A vehicle transmission assembly**
Fahrzeuggetriebeanordnung
Ensemble de transmission pour véhicule

(30) Priority: 15.03.2006 GB 0605191
(43) Date of publication of application: 19.09.2007
(73) Proprietor: Ford Global Technologies, LLC, Dearborn, MI 48126 (US); Countytrac Limited, Ashford, Kent TN23 1EW (GB)
(72) Inventor: May, Eric, Ashford, Kent TN23 1EW (GB)
(74) Representative: Grunfeld, David Peter

(56) References cited:
- WO-A-03/095256
- WO-A2-2005/080117
- US-A- 2 289 646
- US-A- 4 792 009
- US-A- 4 911 258

## Description

This invention relates to a transmission assembly for a vehicle and in particular but not exclusively to vehicles having an all wheel drive facility, and to transmission assemblies therefor.

In the present trend towards more and more compact vehicles, vehicles having longitudinally arranged engines with front wheel drives are known to have gearboxes and drive lines arranged around the engine.

In GB-A-2345 041, the gearbox is arranged at the rear of the engine with a final drive assembly and differential unit located to one side of the engine with a drive shaft extending transversely between the wheels below the engine sump. The differential unit is driven by an input shaft located within the transmission assembly and the whole unit is in a separate casing which is secured to the gearbox housing thereby avoiding mounting the final drive assembly on the engine lower structure. However, with more and more stringent space requirements, the arrangement with the final drive unit in some applications occupies too much space on that particular side of the engine.

In US Patent 3213 958 (Muller) the gear box is arranged alongside the engine and the final drive train extends transversely through the engine sump below the crankshaft. The drive train has a split differential with a differential input unit located on one side of the engine and a differential output located on the other side of the engine. This arrangement has disadvantages in that the drive shaft passes through the engine sump.

In WO 03095256, the power is taken from the final drive shaft at the rear of the gear box and is brought forward from the rear of the gear box on one side of the engine using an angled auxiliary drive shaft coupled to the final drive shaft through a universal joint, preferably a constant velocity joint. This allows the auxiliary shaft to be routed to avoid other components in the engine compartment when space is tight e.g steering racks.

Another transmission assembly is known by US 4792009.

The present invention provides a further vehicle final drive assembly which is particularly useful for vehicles having a primary wheel drive and a secondary wheel drive and which is a yet more compact arrangement.

According to one aspect of the invention there is provided a transmission assembly for a motor vehicle having a pair of front wheels and a pair of rear wheels, an engine mounted longitudinally in the vehicle, the transmission assembly including a gearbox casing with a change speed transmission forming a primary drive within the casing and having a transmission input shaft connectable to the engine, and a transmission output shaft forming a transmission output having a plurality of gear wheels thereon and which is connected in use to a primary drive shaft driving a differential unit for said rear pair of wheels, **characterised in that** one of the gear wheels located at an intermediate portion of the transmission output shaft is a fixed gear wheel fast therewith and is a drive gear for one of the selectable ratios provided in the drive between the transmission input shaft and the transmission output shaft, is also driveably connected to an auxiliary final drive system for power take-off to the front pair of wheels.

Conveniently the primary drive is to the rear pair of wheels and the auxiliary drive to the front pair of wheels.

Conveniently, the fixed gear is the drive gear for the third or fourth gear ratio in the selected range of gears, and more preferably the third gear.

The change speed transmission may include rotary drive components and selector components substantially identical to those produced for a six speed transmission used on a rear wheel drive motor vehicle with a longitudinal engine having the transmission assembly mounted longitudinally behind the engine. Furthermore, the change speed transmission may include a casing component substantially identical to one produced for such a change speed transmission.

The auxiliary drive gear is operably connected to said other pair of wheels by an auxiliary final drive system which includes an auxiliary drive gear system with a transfer gear supported in a bearing in an auxiliary casing and which meshes with the fixed gear on the main shaft.

Conveniently, in the auxiliary drive gear system the transfer gear meshes with a driven gear rotatably fast with one end of a first auxiliary shaft which is substantially parallel with the main shaft, is also supported on a bearing in the auxiliary casing, and having a first bevel gear on the other end of the shaft, the first bevel gear engaging with a second bevel gear fast with one end of a second auxiliary shaft which extends normally of the first shaft and is also supported in the auxiliary casing, the second shaft having an auxiliary final drive output gear fast on its other end.

Conveniently the final drive output gear is the helical pinion of a helical gear final drive set comprising the helical pinion and a helical gear wheel.

Preferably, the auxiliary final gear drive set is connected to a final drive assembly for the auxiliary drive to said other pair of wheels, the final drive assembly comprising a pair of hydraulically operable couplings which are connected in parallel to the helical pinion, each coupling having an output shaft rotatably connected to said helical pinion through clutch means within the coupling, said output shafts in use driving a respective wheel on the auxiliary drive axle.

The change speed transmission casing is attached to a bell housing which in use is mounted on the engine and encloses a drive coupling, typically a friction clutch, and the auxiliary casing for the auxiliary drive gear system is mounted to one side of the transmission casing.

The final drive assembly is arranged with the two hydraulically operated couplings being spaced apart and located one on each side of the transmission casing, preferably either side of the bell housing.

The two hydraulic couplings each comprise a hollow casing which houses said clutch means, the two casings being rotatably connected in parallel to the helical pinion.

Preferably the two casings are interconnected by a cross shaft and the helical gear ring is rotatably fast with one of said casings.

The final drive assembly includes a housing as is disclosed in WO 03095256, in which the shafts and couplings are mounted, the housing containing transmission fluid which is used to operate the couplings. The couplings may each comprise a plurality of coaxial clutch plates having alternating plates rotationally fast with the casing and respective output shaft, the clutch plates being biased into frictional engagement by hydraulic actuation. Such a coupling is disclosed in US 5310 388 which discloses details of operation of the hydraulic controls for operation of the multi-plate clutch.

Yet another aspect of the invention relates to a motor vehicle having a transmission assembly according to the first aspect of the invention.

The invention will be described by way of example and with reference to the accompanying drawings in which:
- Fig.1: is a schematic view of a motor vehicle having a transmission assembly according to the present invention,
- Fig.2: is an isometric schematic view of the auxiliary drive gear system in the transmission assembly according to the present invention,
- Fig.3: is an isometric view of the auxiliary drive system of Fig.2 shown in situ in a casing,
- Fig. 4: is a sectional view of the second gear shaft of the auxiliary gear system,
- Fig. 5: is an isometric view from the front of the change speed transmission and auxiliary final drive assembly, and
- Fig. 6: is an isometric view from the rear of the transmission and auxiliary final drive assembly shown in Fig. 5.

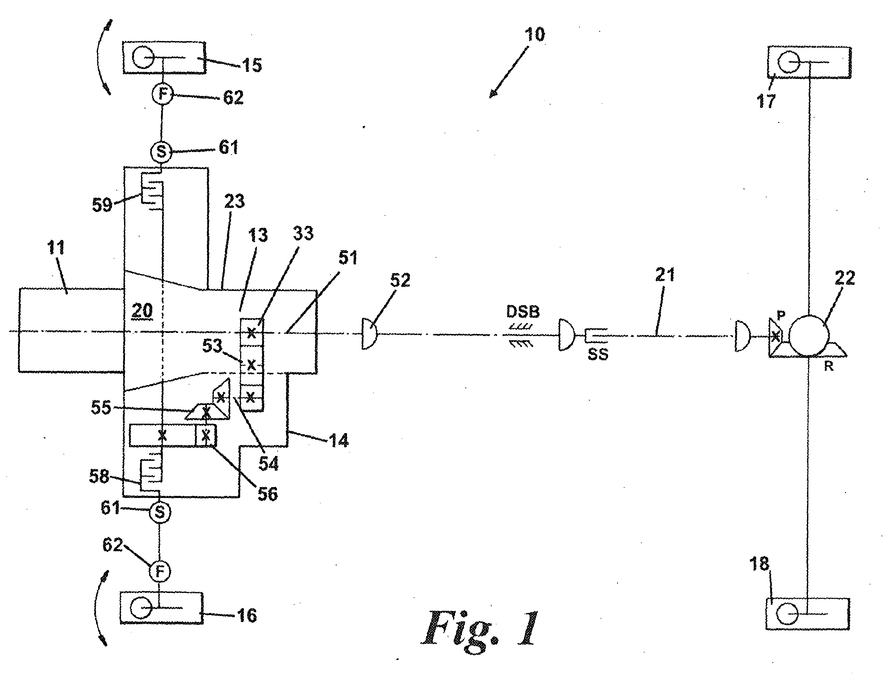

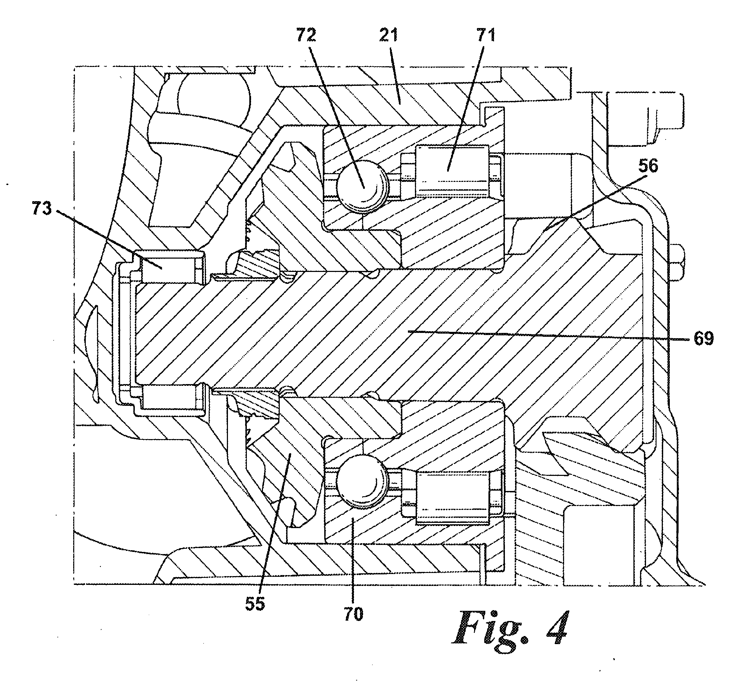

With reference to Fig.1, there is shown a motor vehicle 10 having an engine 11 arranged longitudinally of the vehicle. The casing 23 of transmission assembly 13 is mounted on the rear of the engine, typically via a clutch bell housing 20. A casing 23 of the transmission assembly is typically mounted to the rear of the bell housing 20. The transmission assembly 13 is arranged with its primary drive connected, preferably, to the rear wheels 17 & 18 which are driven by the transmission main shaft 51 (see Fig 4) via a conventional drive shaft 21 and differential unit 22 having the typical ring gear R and pinion P. The transmission assembly 13 also includes an auxiliary final drive system 14 which drives the front wheels 15 and 16.

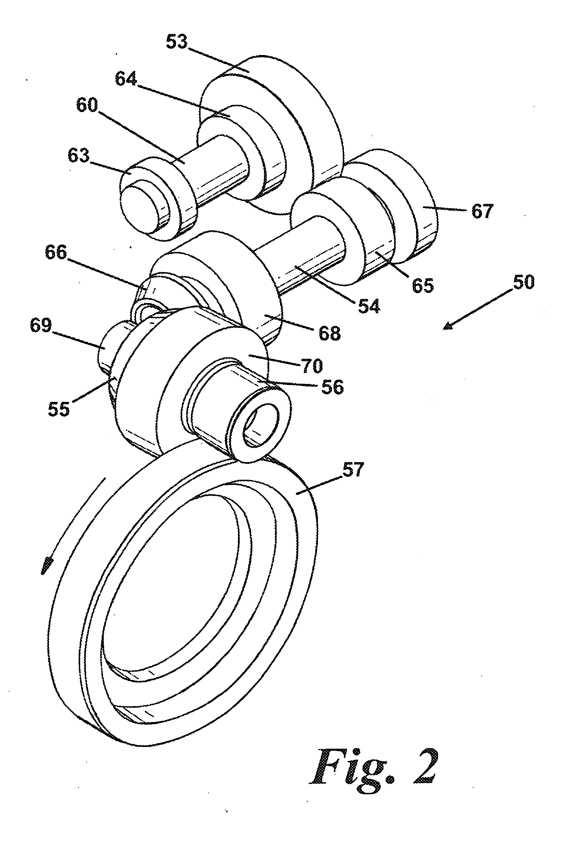

The auxiliary drive for the front wheels 15 & 16 is taken off the transmission shaft 51 via an auxiliary final drive gear system 50, (see Fig.2) which meshes with a gear 33 rotatably fast with the main gear shaft 51. The fixed gear 33 meshes with an auxiliary drive gear system 50 including a transfer gear 53 mounted on shaft 60, a driven gear 65 mounted on shaft 54 which has a bevel gear 66 on its other end, a second bevel gear 55, helical pinion gear 56 and a helical ring gear 57, all as is shown in detail in Fig 2.

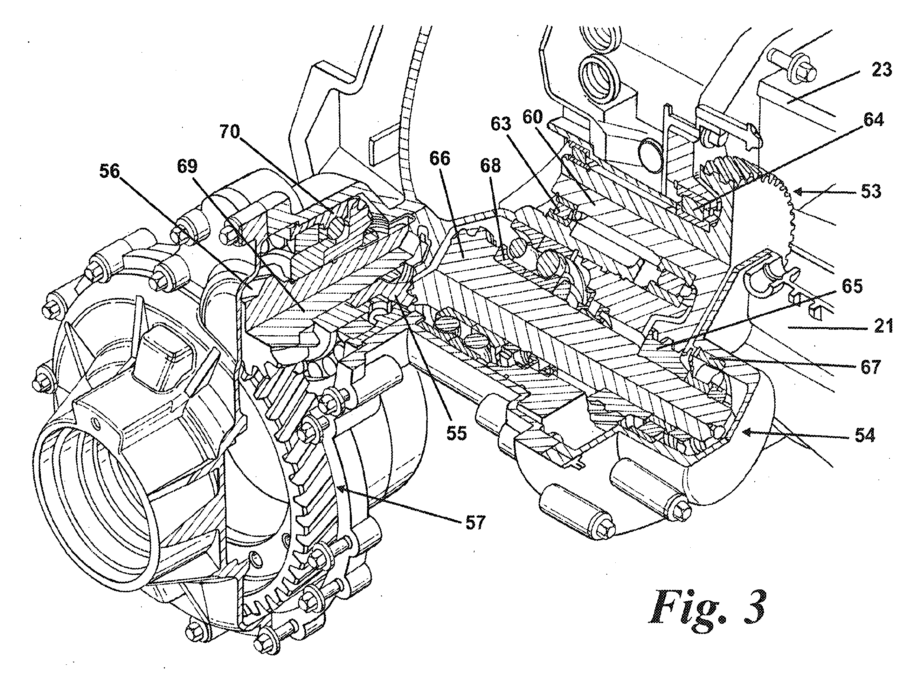

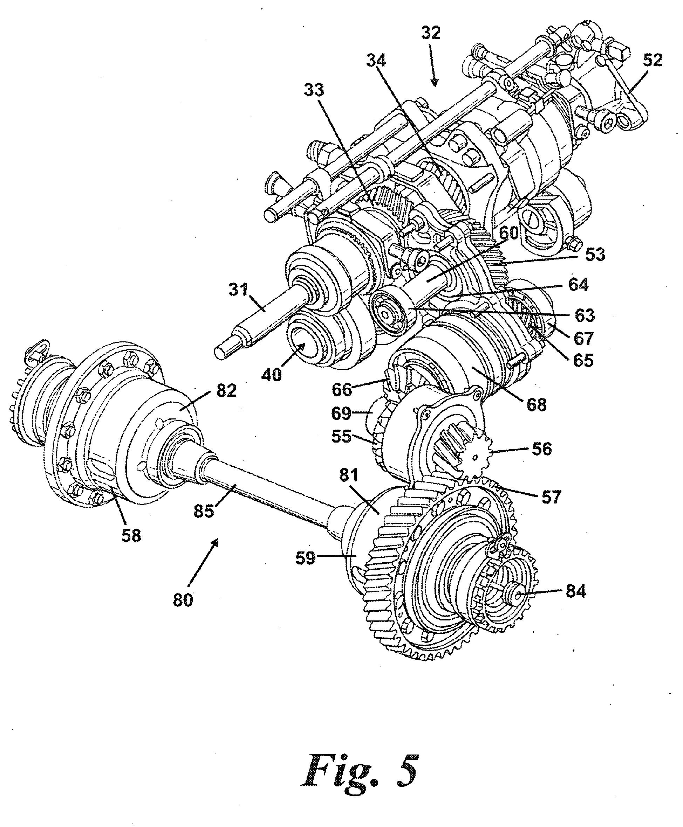

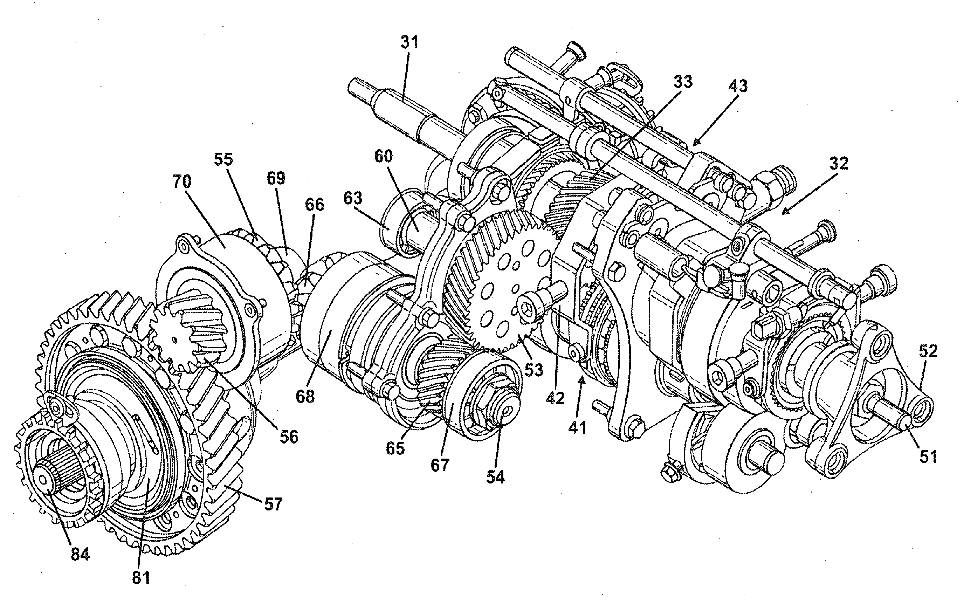

The ring gear 57 is connected in parallel to a pair of hydraulically operated couplings 58 and 59 which are in turn connected to respective wheels 15 or 16 through constant velocity joints 61 & 62. Referring also to Figs. 2 to 6, the transmission assembly 13 includes a drive coupling (not shown), typically a friction clutch, mounted on the rear of the engine 11 and enclosed in the bell housing 20. The bell housing 20 is secured to, or formed integrally with, the gear box casing 23. The drive coupling is rotatably connected to the transmission input shaft 31 which through the change speed gears 32 drives the transmission main gear shaft 51 which is provided with a coupling flange 52 for connection to the drive shaft 21. The main gear shaft 51 is supported for rotation in the casing 23 by bearings as is well known. The arrangement of the change speed gears and the operation of the gearbox is for a known six speed gearbox and will only be described as is necessary for an understanding of the present invention.

The transmission assembly is a constant mesh gearbox with the input shaft 31 driving the main shaft 51 via a lay shaft 40. The main gear shaft 51 is provided with two fixed gear wheels 33 & 34, for the third and fourth gear speed ranges respectively, which constantly mesh with rotating gears on the lay shaft 40. These two gears speed ratios are selected by the movement of a dog clutch 41 along the lay shaft by the means of a selector fork 42 mounted on a selector mechanism 43. All this is well known.

The fixed gear 33 on the main gear shaft 51 is used for powering the auxiliary drive system 50 to the front wheels 15 & 16. Whilst a specific gear wheel may be provided in some transmission systems, in this particular arrangement, it is convenient to utilise one of the fixed third and fourth gears 33, 34, and preferably the third gear 33.

The fixed gear 33 on the main gear shaft 51, drives the transfer gear 53 which is rotatably mounted in the casing 21 via a pair of bearings 63, 64. The transfer gear 53 on the shaft 60 meshes with the driven gear 65 fixed to one end of the first shaft 54, which has the bevel gear 66 fixed at its other end. The first shaft 54 extends forwardly from the transfer gear 53 towards the front of the transmission assembly and is rotatably supported in the casing 21 by bearings 67, 68. The bevel gear 66 at the front end of the shaft 54 meshes with the bevel gear 55 fixed to one end of a second shaft 69 which extend substantially normal to the shaft 54. The second shaft 69 is shown in detail in Fig.4, and is rotatably mounted in the casing 21 by bearing 70 & 73. The other end of the second shaft is connected to the helical pinion gear 56 which is drivably connected to the ring gear 57. The ring gear 57 in use is connected to an auxiliary final drive system.

The bearing 70 for the shaft 69 is a combined ball and roller bearing. The roller bearings 71 providing for rotation of the shaft 69 in the casing 21, and the ball bearings 72 acting as thrust bearings against axial loads exerted on the bevel gear 55.

The auxiliary final drive system is a differential system 80 which incorporates the hydraulic couplings 58 & 59 and which in use is mounted in a housing (not shown) and extending across the front lower portion of the gear box casing 23 and bell housing 20. A description of the differential system is to be found in WO 03095256, the contents of which are hereby incorporated into the present application. The housing is suitably sealed and contains hydraulic fluid for operation of the hydraulically operated couplings 58 and 59.

The coupling 59 has a casing 81 of hollow construction which has the gear ring 57 extending around its outer surface for meshing with the pinion 56 to drive the differential 80. The casing 81 is mounted in the housing (not shown) so that rotation of the pinion 56 causes the casing 81 to rotate. The casing 81 is connected to the similar casing 82 of the other second hydraulic coupling 58 by a coaxial cross shaft 83 so that the pinion 57 drives both casings 81 and 82 in parallel. The two couplings 58 and 59 drive respective coaxial half shafts 84 which are in turn connected to the wheels 15 and 16 through constant velocity joints 62. A more detailed explanation of the operation of the couplings 58 & 59 is given in both US 5310 388 and WO 03095256

When a vehicle is driving normally along a highway, the primary drive is through the differential 22 and back axle. Since the front wheel half shafts 84 are rotating at the same speed as the casings 81, 82 there is essentially no drive through the front wheels. If in a particular situation, the rear wheels slip so that there is a significant difference in rotational speed between the shaft 21 and connected half shafts 84 and a respective casing 81 or 82, then the couplings 58 and/or 59 transmit drive from respective casing to a respective wheel. The drive is supplied to each wheel completely independently of the other wheel across the front axle.

The auxiliary drive gear system 50 may be located on which ever side of the transmission casing is most convenient.

## Claims

1. A transmission assembly (13) for a motor vehicle (10) having a pair of front wheels (15, 16) and a pair of rear wheels (17, 18), an engine (11) mounted longitudinally in the vehicle (10) and a transmission assembly (13) including a gearbox casing (23) with a change speed transmission forming a primary drive within the casing (23) and having a transmission input shaft (31) connectable to the engine (11), and a transmission output shaft (51) forming a transmission output having a plurality of gear wheels (33, 34) thereon and which is connected in use to a primary drive shaft (21) driving a differential unit (22) for said rear pair of wheels (17, 18), **characterised in that** one of the gear wheels (33), located at an intermediate portion of the transmission output shaft (51) is a fixed gear wheel fast therewith and is a drive gear for one of the selectable ratios provided in the drive between the transmission input shaft (31) and the transmission output shaft (51), is also driveably connected to an auxiliary final drive system (50) for power take-off to the front pair of wheels (15, 16).

2. A transmission assembly (13) as claimed in Claim 1, wherein the fixed gear (33) drives the third or fourth selectable gear ratio in a range of six gears.

3. A transmission assembly (13) as claimed in Claim 2, wherein the fixed gear (33) drives the third gear ratio.

4. A transmission assembly (13) as claimed in any one of Claims 1 to 3, wherein the auxiliary final drive system includes an auxiliary drive gear system (50) with a transfer gear (53) supported in a bearing (63, 64) in an intermediate casing (21) and which meshes with the fixed gear (33) on the main shaft (51).

5. A transmission assembly (13) as claimed in Claim 4, wherein in the auxiliary drive gear system (50) the transfer gear (53) meshes with a driven gear (65) rotatably fast with one end of a first auxiliary shaft (54) which is substantially parallel with the main shaft (51), is also supported on a bearing (67, 68) in the intermediate casing (21), and has a first bevel gear (66) on its other end, the first bevel gear (66) engaging with a second bevel gear (55) fast with one end of a second auxiliary shaft (69) which extends normally of the first shaft (54) and is also supported in the intermediate casing (21), the second shaft (69) having an auxiliary final drive output gear (56) fast on its other end.

6. A transmission assembly (13) as claimed in Claim 5, wherein the final drive output gear (56) is the helical pinion of a helical gear final drive set comprising the helical pinion and a helical gear wheel (57).

7. A transmission assembly (13) as claimed in Claim 6, wherein the second auxiliary shaft (69) is supported in the casing (21) by a bearing (70) which is a combined ball and roller bearing, the roller bearings (71) providing for rotation of the shaft (69) in the casing (21) and the ball bearings (72) acting as thrust bearings against axial loads exerted on the bevel gear (55).

8. A transmission assembly (13) as claimed in any one of Claims 5 to 7, wherein the auxiliary final drive output gear (56) is connected to a final drive assembly (80) for auxiliary drive to said front pair of wheels (15, 16), the final drive assembly (80) comprising a pair of hydraulically operable couplings (58, 59) which are each connected in parallel to the final output gear through respective clutch means within the coupling (58, 59).

9. A transmission assembly (13) as claimed in Claim 8, in which the final drive assembly (80) is arranged with the two hydraulically operated couplings (58, 59) being spaced apart and located one on each side of the transmission casing (23), either side of a bell housing thereon.

10. A transmission assembly (13) as claimed in Claim 8 or Claim 9, wherein the two hydraulic couplings (58, 59) each comprise a hollow casing which houses said clutch means, the two casings being rotatably connected in parallel to the helical gear wheel (57).

11. A motor vehicle (10) having a transmission assembly (13) according to any one of Claims 1 to 10.

## Patentansprüche

1. Getriebeanordnung (13) für ein Kraftfahrzeug (10), das Folgendes umfasst: ein Paar Vorderräder (15, 16) und ein Paar Hinterräder (17, 18), einen in Längsrichtung des Fahrzeugs (10) eingebauten Motor (11) und eine Getriebeanordnung (13), die ein Getriebegehäuse (23) mit einem Gangwechselgetriebe enthält, das einen Primärantrieb in dem Gehäuse (23) bildet und Folgendes enthält: eine Getriebeeingangswelle (31), die mit dem Motor (11) verbunden werden kann, und eine Getriebeausgangswelle (51), die einen Getriebeausgang mit mehreren daran angebrachten Zahnrädern (33, 34), die im Gebrauch mit einer Hauptantriebswelle (21) verbunden ist, die eine Differentialeinheit (22) für das hintere Räderpaar (17, 18) antreibt, aufweist,
**dadurch gekennzeichnet, dass** eines der Zahnräder (33), das sich in einem Zwischenabschnitt der Getriebeausgangswelle (51) befindet, ein festes Zahnrad ist, das daran befestigt ist und ein Antriebszahnrad für eines der wählbaren Verhältnisse ist, die in dem Antrieb zwischen der Getriebeeingangswelle (31) und der Getriebeausgangswelle (51) vorgesehen sind, und außerdem antriebstechnisch mit einem Hilfsendantriebssystem (50) für die Unterbrechung der Leistung an das vordere Paar von Rädern (15, 16) verbunden ist.

2. Getriebeanordnung (13) nach Anspruch 1, wobei das feste Zahnrad (33) das dritte oder das vierte wählbare Übersetzungsverhältnis in einem Bereich von sechs Gängen antreibt.

3. Getriebeanordnung (13) nach Anspruch 2, wobei das feste Zahnrad (33) das dritte Übersetzungsverhältnis antreibt.

4. Getriebeanordnung (13) nach einem der Ansprüche 1 bis 3, wobei das Hilfs-Endantriebssystem ein HilfsAntriebszahnradsystem (50) mit einem Übertragungszahnrad (53), das in einem Lager (63, 64) in einem Zwischengehäuse (21) unterstützt ist und mit dem festen Zahnrad (33) auf der Hauptwelle (51) kämmt, enthält.

5. Getriebeanordnung (13) nach Anspruch 4, wobei in dem Hilfsantriebszahnradsystem (50) das Übertragungszahnrad (53) mit einem angetriebenen Zahnrad (65) kämmt, das drehfest mit einem Ende einer ersten Hilfswelle (54) verbunden ist, die zu der Hauptwelle (51) im Wesentlichen parallel ist, ebenfalls auf einem Lager (67, 68) in dem Zwischengehäuse (21) unterstützt ist und an seinem anderen Ende ein erstes Kegelrad (66) besitzt, wobei das erste Kegelrad (66) mit einem zweiten Kegelrad (55) in Eingriff ist, das an einem Ende einer zweiten Hilfswelle (69) befestigt ist, die sich senkrecht zu der ersten Welle (54) erstreckt und ebenfalls in dem Zwischengehäuse (21) unterstützt ist, wobei die zweite Welle (69) ein an ihrem anderen Ende befestigtes Hilfs-Endantriebs-Ausgangszahnrad (56) besitzt.

6. Getriebeanordnung (13) nach Anspruch 5, wobei das Endantriebs-Ausgangszahnrad (56) das Schrägverzahnungsritzel einer Schrägverzahnungsgetriebe-Endantriebsgruppe ist, die das Schrägverzahnungsritzel und ein Schrägverzahnungszahnrad (57) enthält.

7. Getriebeanordnung (13) nach Anspruch 6, wobei die zweite Hilfswelle (69) in dem Gehäuse (21) durch ein Lager (70) unterstützt ist, das ein kombiniertes Kugel-und Rollenlager ist, wobei die Rollenlager (71) eine Drehung der Welle (69) in dem Gehäuse (21) schaffen und die Kugellager (72) als Schublager gegen axiale Lasten, die auf das Kegelrad (55) ausgeübt werden, wirken.

8. Getriebeanordnung (13) nach einem der Ansprüche 5 bis 7, wobei das Hilfs-Endantriebs-Ausgangszahnrad (56) mit einer Endantriebsanordnung (80) für den Hilfsantrieb des vorderen Räderpaars (15, 16) verbunden ist, wobei die Endantriebsanordnung (80) ein Paar hydraulisch betätigbarer Kupplungen (58, 59) enthält, die jeweils parallel zu dem Endausgangszahnrad über jeweilige Kupplungsmittel in der Kupplung (58, 59) verbunden sind.

9. Getriebeanordnung (13) nach Anspruch 8, wobei die Endantriebsanordnung (80) mit zwei hydraulisch betätigten Kupplungen (58, 59) versehen ist, die voneinander beabstandet sind und sich jeweils auf einer Seite des Getriebegehäuses (23), den jeweiligen Seiten eines Glockengehäuses, befinden.

10. Getriebeanordnung (13) nach Anspruch 8 oder Anspruch 9, wobei die zwei hydraulischen Kupplungen (58, 59) jeweils ein hohles Gehäuse enthalten, das die Kupplungsmittel enthält, wobei die zwei Gehäuse mit dem Schrägverzahnungszahnrad (57) drehbar und parallel verbunden sind.

11. Kraftfahrzeug (10), das eine Getriebeanordnung (13) nach einem der Ansprüche 1 bis 10 besitzt.

## Revendications

1. Ensemble de transmission (13) pour un véhicule à moteur (10) ayant une paire de roues avant (15, 16) et une paire de roues arrière (17, 18), un moteur (11) monté longitudinalement dans le véhicule (10) et un ensemble de transmission (13) comportant un carter (23) de boîte de vitesses avec une transmission de changement de vitesse formant un entraînement primaire à l'intérieur du carter (23) et ayant un arbre d'entrée de transmission (31) qui peut être relié au moteur (11), et un arbre de sortie de transmission (51) formant une sortie de transmission ayant une pluralité de roues d'engrenage (33, 34) sur celui-ci et qui est relié lors de l'utilisation à un arbre d'entraînement primaire (21) entraînant une unité différentielle (22) pour ladite paire arrière de roues (17, 18), **caractérisé en ce que** l'une des roues d'engrenage (33), située au niveau d'une partie intermédiaire de l'arbre de sortie de transmission (51), est une roue d'engrenage fixe solidaire de ce dernier et est une roue d'entraînement pour l'un des rapports sélectionnables fournis dans l'entraînement entre l'arbre d'entrée de transmission (31) et l'arbre de sortie de transmission (51), et est aussi en liaison d'entraînement avec un système d'entraînement final auxiliaire (50) pour la prise de force vers la paire avant de roues (15, 16).

2. Ensemble de transmission (13) selon la revendication 1, dans lequel la roue fixe (33) entraîne le troisième ou quatrième rapport de vitesse sélectionnable dans une plage de six rapports de vitesse.

3. Ensemble de transmission (13) selon la revendication 2, dans lequel la roue fixe (33) entraîne le troisième rapport de vitesse.

4. Ensemble de transmission (13) selon l'une quelconque des revendications 1 à 3, dans lequel le système d'entraînement final auxiliaire comporte un système d'engrenages d'entraînement auxiliaire (50) avec une roue de transfert (53) supportée dans un roulement (63, 64) dans un carter intermédiaire (21) et qui s'engrène avec la roue fixe (33) sur l'arbre principal (51).

5. Ensemble de transmission (13) selon la revendication 4, dans lequel dans le système d'engrenages d'entraînement auxiliaire (50) la roue de transfert (53) s'engrène avec une roue entraînée (65) solidaire en rotation d'une extrémité d'un premier arbre auxiliaire (54) qui est sensiblement parallèle à l'arbre principal (51), est aussi supporté sur un roulement (67, 68) dans le carter intermédiaire (21), et a une première roue conique (66) sur son autre extrémité, la première roue conique (66) s'engageant avec une deuxième roue conique (55) solidaire d'une extrémité d'un deuxième arbre auxiliaire (69) qui s'étend perpendiculairement au premier arbre (54) et est aussi supporté dans le carter intermédiaire (21), le deuxième arbre (69) ayant une roue de sortie (56) d'entraînement final auxiliaire fixée sur son autre extrémité.

6. Ensemble de transmission (13) selon la revendication 5, dans lequel la roue de sortie (56) d'entraînement final est le pignon hélicoïdal d'un engrenage d'entraînement final hélicoïdal comprenant le pignon hélicoïdal et une roue d'engrenage hélicoïdale (57).

7. Ensemble de transmission (13) selon la revendication 6, dans lequel le deuxième arbre auxiliaire (69) est supporté dans le carter (21) par un roulement (70) qui est un roulement à billes et à rouleaux combiné, les roulements à rouleaux (71) permettant la rotation de l'arbre (69) dans le carter (21) et les roulements à billes (72) agissent en tant que paliers de butée contre les efforts axiaux exercés sur la roue conique (55).

8. Ensemble de transmission (13) selon l'une quelconque des revendications 5 à 7, dans lequel la roue de sortie (56) d'entraînement final auxiliaire est reliée à un ensemble d'entraînement final (80) pour l'entraînement auxiliaire vers ladite paire avant de roues (15, 16), l'ensemble d'entraînement final (80) comprenant une paire d'accouplements (58, 59) à actionnement hydraulique qui sont chacun reliés en parallèle à la roue de sortie finale par l'intermédiaire de moyens d'embrayage respectifs à l'intérieur de l'accouplement (58, 59).

9. Ensemble de transmission (13) selon la revendication 8, dans lequel l'ensemble d'entraînement final (80) est agencé avec les deux accouplements (58, 59) à actionnement hydraulique espacés l'un de l'autre et situés de chaque côté du carter de la transmission (23), de part et d'autre d'un boîtier en cloche sur ce dernier.

10. Ensemble de transmission (13) selon la revendication 8 ou 9, dans lequel les deux accouplements (58, 59) à actionnement hydraulique comprennent chacun un carter creux qui loge ledit moyen d'embrayage, les deux carters étant reliés de manière rotative en parallèle à la roue d'engrenage hélicoïdale (57).

11. Véhicule à moteur (10) ayant un ensemble de transmission (13) selon l'une quelconque des revendications 1 à 10.
